# EUROPÄISCHE PATENTSCHRIFT

(11) **EP 4 284 747 B1**
(45) Veröffentlichungstag und Bekanntmachung des Hinweises auf die Patenterteilung: **26.02.2025**
(21) Anmeldenummer: 21838983.1
(22) Anmeldetag: 08.12.2021
(51) Int. Cl.: B66F 9/02, A01K 5/01, A01K 5/02

(54) **HUBWERK MIT EINEM RELATIV ZU EINEM TRAGTEIL DES HUBWERKS IN EINER BEWEGUNGSRICHTUNG BEWEGBAR ANGEORDNETEN HUBKASTEN UND VERFAHREN ZUM BETREIBEN EINES HUBWERKS**
LIFTING UNIT COMPRISING A LINEARLY MOVABLE CARRIAGE THAT IS MOVABLY ARRANGED RELATIVE TO A SUPPORT PART OF THE LIFTING UNIT IN A MOVEMENT DIRECTION, AND METHOD FOR OPERATING A LIFTING UNIT
UNITÉ DE LEVAGE COMPRENANT UN CHARIOT LINÉAIREMENT MOBILE QUI EST DISPOSÉ MOBILE PAR RAPPORT À UNE PARTIE SUPPORT DE L'UNITÉ DE LEVAGE DANS UNE DIRECTION DE DÉPLACEMENT, ET PROCÉDÉ DE FONCTIONNEMENT D'UNE UNITÉ DE LEVAGE

(30) Priorität: 26.01.2021 US 202163141637 P; 07.05.2021 DE 102021002427
(43) Veröffentlichungstag der Anmeldung: 06.12.2023
(73) Patentinhaber: SEW-EURODRIVE GmbH & Co. KG, 76646 Bruchsal (DE)
(72) Erfinder: BLICKLE, Rainer, Lyman, SC 29365 (US)
(86) Internationale Anmeldenummer: PCT/EP2021/025485
(87) Internationale Veröffentlichungsnummer: WO 2022/161588

(56) Entgegenhaltungen:
- EP-A1- 2 767 500
- CN-U- 201 713 264
- DE-A1- 102017 010 448
- US-A- 3 563 341
- US-A1- 2010 102 284
- US-B1- 8 776 725

## Beschreibung

Die Erfindung betrifft ein Hubwerk mit einem relativ zu einem Tragteil des Hubwerks in einer Bewegungsrichtung bewegbar angeordneten Hubkasten und ein Verfahren zum Betreiben eines Hubwerks.

Es ist allgemein bekannt, dass mittels eines Hubwerks ein Hubteil vertikal verfahrbar ist.

**Aus der** CN 201 713 264 U **ist als nächstliegender Stand der Technik ein Hubwerk bekannt.**

Aus den DE102017010448A1 und US8776725B sind Hubwerke zum Höhenverstellen von Futternapfhaltern bekannt.

**Aus der** US 3 563 341 A **ist ein Gabellifter bekannt.**

**Aus der** US 2010 / 102284 A1 **ist eine Hebevorrichtung für Fahrzeuge bekannt.**

**Aus der** EP 2 767 500 A1 **ist ein elektrischer Lifter bekannt.**

Der Erfindung liegt daher die Aufgabe zugrunde, ein Hubwerk in betriebssicherer Weise weiterzubilden und betreibbar zu machen.

Erfindungsgemäß wird die Aufgabe bei dem Hubwerk nach den in Anspruch 1 und bei dem Verfahren nach den in Anspruch 14 angegebenen Merkmalen gelöst.

Wichtige Merkmale der Erfindung bei dem Hubwerk mit einem relativ zu einem Tragteil des Hubwerks in einer Bewegungsrichtung bewegbar angeordneten Hubkasten,
wobei das Tragteil auf einer Grundplatte aufgestellt und mit dieser Grundplatte verbunden ist,
wobei am Tragteil zumindest eine Linearführung, zumindest eine Stromschiene und eine Zahnstange befestigt sind,
wobei im Hubkasten ein Elektromotor angeordnet ist,
wobei ein Zahnrad im Eingriff ist mit der Zahnstange und drehfest verbunden ist mit einer Welle des Elektromotors,
wobei ein Hubteil mit dem Hubkasten verbunden ist,
wobei die senkrechte Projektion des Hubteils auf eine Ebene, deren Normalenrichtung parallel zur Bewegungsrichtung ausgerichtet ist, in der senkrechten Projektion der Grundplatte auf diese Ebene enthalten ist, insbesondere also von ihr umfasst ist.

Von Vorteil ist dabei, dass das Hubwerk stabil aufgestellt und betreibbar ist. Denn ein Umkippen ist verhindert. Außerdem ist der elektromotorische Antrieb des Hubkastens im Hubkasten selbst angeordnet und somit geschützt. Durch das Tragteil ist eine hohe Stabilität und gleichzeitig eine präzise Ausrichtung der Linearführungen, der Zahnstange und der Stromschienen zueinander ermöglicht, da diese Komponenten alle auf dem selben Teil montiert sind. Die relative Ausrichtung ist also einfach und sehr präzise bei der Montage ausführbar.

Bei einer vorteilhaften Ausgestaltung ist das Hubteil an einer Vorderseite des Hubkastens befestigt und die Grundplatte zur Vorderseite hin weiter hervorragt als das Hubteil, insbesondere zur Verhinderung des Umkippens des Hubwerks. Von Vorteil ist dabei, dass ein Umkippen verhindert ist und somit die Sicherheit verbessert ist.

Bei einer vorteilhaften Ausgestaltung ist die Grundplatte aus Stahl gefertigt und die Wandstärke der Grundplatte ist größer als die Wandstärke des Tragteils, insbesondere der Rückwand des Tragteils. Von Vorteil ist dabei, dass die Grundplatte ein hohes Gewicht aufweist und somit Sicherheit bewirkt.

Bei einer vorteilhaften Ausgestaltung umfasst der Elektromotor ein Getriebe, insbesondere also der Elektromotor ein Getriebemotor ist,
wobei die Welle die abtreibende Welle des Getriebes ist. Von Vorteil ist dabei, dass ein hohes Drehmoment erzeugbar ist und somit eine große Masse bewegbar ist.

Bei einer vorteilhaften Ausgestaltung ist das Getriebe selbsthemmend ausgeführt, insbesondere so, dass das Getriebe einen Drehmomentfluss von der als Rotorwelle des Elektromotors ausgeführten eintreibenden Welle des Getriebes zur abtreibenden Welle des Getriebes durchleitet und einen Drehmomentfluss von der abtreibenden Welle des Getriebes zur als Rotorwelle des Elektromotors ausgeführten eintreibenden Welle des Getriebes hemmt. Von Vorteil ist dabei, dass bei Nichtbestromung des Elektromotors eine Bewegung verhindert ist. Somit ist die Sicherheit erhöht.

Bei einer vorteilhaften Ausgestaltung ist das Tragteil, insbesondere eine Rückwand des Tragteils, als erster Schenkel eines L-förmig geformten Teils ausgebildet und auf den anderen Schenkel des L-förmig geformten Teils ist die Grundplatte aufgelegt. Von Vorteil ist dabei, dass eine hohe Stabilität und somit Sicherheit erreichbar ist.

Bei einer vorteilhaften Ausgestaltung ist das Tragteil mehrstückig ausgeführt, wobei es zwei Seitenwandteile und eine mit diesen Seitenwandteilen verbundene Rückwand aufweist. Von Vorteil ist dabei, dass ein stabiler kostengünstiger Aufbau ermöglicht ist.

Bei einer vorteilhaften Ausgestaltung ist ein Führungsteil am Hubkasten befestigt, das mit der Linearführung in Wirkverbindung ist,
insbesondere wobei das Führungsteil zweistückig ausgeführt ist, wobei die beiden Stücke des Führungsteils in Bewegungsrichtung voneinander beabstandet sind. Von Vorteil ist dabei, dass eine sehr gute Ausrichtung und eine hohe Sicherheit erreichbar sind. Durch die Beabstandung sind die jeweils beiden Stücke weit auseinander anordenbar und daher ist eine hohe Stabilität erreichbar.

Bei einer vorteilhaften Ausgestaltung sind am Hubkasten zwei, insbesondere senkrecht und/oder quer zur Bewegungsrichtung voneinander beabstandete Führungsteile befestigt, welche formschlüssig mit den Linearführungen verbunden sind und dabei nur einen einzigen translatorischen Freiheitsgrad aufweisen, der die Linearbewegung der Führungsteile und/oder des Hubkastens entlang der Linearführungen ermöglicht. Von Vorteil ist dabei, dass eine hohe Stabilität und somit Sicherheit bei gleichzeitig wenig Materialverbrauch und Masse erreichbar ist.

Bei einer vorteilhaften Ausgestaltung sind am Hubkasten oder am Elektromotor Bürsten befestigt, welche die Stromschienen berühren. Von Vorteil ist dabei, dass der Hubkasten mittels kostengünstigem Schleifkontakt elektrisch versorgbar ist.

Bei einer vorteilhaften Ausgestaltung ist am Hubkasten oder am Elektromotor eine Sekundärwicklung angeordnet, welche induktiv gekoppelt ist mit zumindest einer der Stromschienen,
welche mit einem Wechselstrom beaufschlagt ist,
wobei der Sekundärwicklung eine Kapazität derart parallel oder in Reihe zugeschaltet ist, dass die Resonanzfrequenz des so gebildeten Schwingkreises der Frequenz des in die Stromschiene eingeprägten Wechselstroms gleicht,
wobei aus dem Schwingkreis ein am Hubkasten oder am Elektromotor angeordneter Gleichrichter gespeist ist, aus dem der Elektromotor versorgt ist,
insbesondere wobei am gleichstromseitigen Anschluss des Gleichrichters ein Glättungskondensator angeordnet ist, insbesondere parallel zum Elektromotor. Von Vorteil ist dabei, dass eine kontaktfreie Versorgung des Hubkastens ermöglicht ist.

Bei einer vorteilhaften Ausgestaltung ist die jeweilige Stromschiene als Rohrhälfte, insbesondere als Kupferrohrhälfte, ausgeführt. Von Vorteil ist dabei, dass eine einfache Herstellung der Stromschienen ermöglicht ist.

Bei einer vorteilhaften Ausgestaltung ist die Rückwand aus Metall ausgeführt und zwischen der Rückwand und der jeweiligen Stromschiene ist ein elektrischer Isolator angeordnet

Bei einer alternativen vorteilhaften Ausgestaltung ist
- die Rückwand aus einem elektrisch isolierenden Material, insbesondere Kunststoff, ausgeführt und die jeweilige Stromschiene liegt an der Rückwand an.

Von Vorteil ist dabei, dass eine hohe Stabilität und somit Sicherheit erreichbar ist.

Bei einer vorteilhaften Ausgestaltung ist am Tragteil, insbesondere am oberen Ende des Tragteils, eine Bedieneinheit, insbesondere HMI-Schnittstelle, angeordnet,
wobei die Bedieneinheit zumindest ein Eingabeelement, insbesondere Wahlschalter, ein Anzeigemittel und einen Mikroprozessor aufweist. Von Vorteil ist dabei, dass eine hohe Sicherheit erreichbar ist, da Informationen gut sichtbar anzeigbar sind und die Bedienung durch Drücken von Eingabemitteln, insbesondere eines Umschalters oder Wahlschalters, in vertikaler Richtung ausführbar ist.

Bei einer vorteilhaften Ausgestaltung ist der Mikroprozessor mit einem Lesegerät, insbesondere NFC-Lesegerät oder RFID-Lesegerät, verbunden,
wobei der Mikroprozessor derart eingerichtet ist, dass abhängig von der aus einem Tag, insbesondere RFID-Tag oder NFC-Tag, ausgelesenen Information der Hubkasten auf eine Linearposition gefahren wird, insbesondere auf eine obere oder auf eine untere Position,
insbesondere wobei die Fahrbewegung des Hubkastens gestoppt wird, wenn der Tag im Nahbereich des Hubkastens sich befindet, insbesondere also die senkrechte Projektion des Tags auf die Ebene in der senkrechten Projektion der Grundplatte auf diese Ebene enthalten ist, insbesondere also von ihr umfasst ist,
insbesondere wobei der Tag an einem Mobilteil, insbesondere an einem Fahrzeug, an einem Haustier oder an einer Person, angeordnet ist. Von Vorteil ist dabei, dass abhängig von der auf dem Tag gespeicherten, vom Lesegerät ausgelesenen Information die Höhenposition des Hubwerks angesteuert wird. Außerdem ist bei zu großer Nähe des Tags ein Stoppen der Fahrbewegung des Hubkastens erreichbar.

Bei einer vorteilhaften Ausgestaltung ist ein Stromsensor im Hubwerk angeordnet, der den durch die Stromschienen fließenden Strom erfasst,
wobei der Mikroprozessor derart eingerichtet ist und den in den Stromschienen fließenden Strom derart steuert, dass der erfasste Wert des Stroms mit einem Schwellwert verglichen wird und bei Überschreiten des Schwellwerts das Hubwerk in einen sicheren Zustand gebracht wird, insbesondere die Stromversorgung abgeschaltete wird oder das Hubwerk auf eine untere Position gebracht wird. Von Vorteil ist dabei, dass bei Gefahr ein sicherer Zustand angesteuert wird.

Bei einer vorteilhaften Ausgestaltung ist ein Stromsensor im Hubwerk angeordnet, der den durch die Stromschienen fließenden Strom erfasst, und ein Sensor zur Erfassung der am Elektromotor anliegenden Spannung im Hubwerk angeordnet ist,
wobei der Mikroprozessor derart eingerichtet ist und den in den Stromschienen fließenden Strom derart steuert, dass aus dem erfassten Stromwert und aus dem erfassten Spannungswert die Leistung des Elektromotors bestimmt wird,
wobei aus der so bestimmten Leistung das Vorhandensein der Behälter und/oder die in den Behältern aufgenommene Masse detektiert und/oder bestimmt wird,
wobei das Hubwerk in einen sicheren Zustand gebracht wird, insbesondere die Stromversorgung abschaltbar oder das Hubwerk auf eine untere Position bringbar, wenn die detektierte und/oder bestimmte Masse einen Schwellwert überschreitet. Von Vorteil ist dabei, dass bei Gefahr ein sicherer Zustand angesteuert wird.

Wichtige Merkmale bei dem Verfahren zum Betreiben eines vorgenannten Hubwerks sind, dass abhängig von der aus einem Tag, insbesondere RFID-Tag oder NFC-Tag, ausgelesenen Information der Hubkasten auf eine Linearposition gefahren wird, insbesondere auf eine obere oder auf eine untere Position, insbesondere wobei die Fahrbewegung des Hubkastens gestoppt wird, wenn der Tag im Nahbereich des Hubkastens sich befindet, insbesondere also die senkrechte Projektion des Tags auf die Ebene in der senkrechten Projektion der Grundplatte auf diese Ebene enthalten ist, insbesondere also von ihr umfasst ist,
insbesondere wobei der Tag an einem Mobilteil, insbesondere an einem Fahrzeug, an einem Haustier oder an einer Person, angeordnet ist.

Von Vorteil ist dabei, dass bei Gefahr ein sicherer Zustand angesteuert wird. Insbesondere wird verhindert, dass das Hubteil vertikal auf das Mobilteil gefahren wird.

Bei einer vorteilhaften Ausgestaltung wird der durch die Stromschienen fließenden Strom erfasst und derart gesteuert wird, dass nach Vergleich des erfassten Werts des Stroms mit einem Schwellwert bei Überschreiten dieses Schwellwerts das Hubwerk in einen sicheren Zustand gebracht wird, insbesondere die Stromversorgung abgeschaltet wird oder das Hubwerk auf eine untere Position gebracht wird. Von Vorteil ist dabei, dass bei Gefahr ein sicherer Zustand angesteuert wird. Insbesondere wird verhindert, dass das Hubteil vertikal auf das Mobilteil gefahren wird.

Bei einer vorteilhaften Ausgestaltung wird der durch die Stromschienen fließenden Strom erfasst wird und die am Elektromotor anliegende Spannung erfasst wird und daraus ein Maß für die Leistung des Elektromotors bestimmt wird und aus diesem Maß ein Wert einer in den Behältern aufgenommenen Masse bestimmt wird und/oder das Vorhandensein der Behälter detektiert wird,
wobei das Hubwerk in einen sicheren Zustand gebracht wird, insbesondere die Stromversorgung abgeschaltet wird oder das Hubwerk auf eine untere Position, insbesondere Endposition, gebracht wird, wenn die detektierte und/oder bestimmte Masse einen Schwellwert überschreitet,
insbesondere und wobei ansonsten bei Nicht-Vorhandensein der Behälter der Hubkasten auf eine obere Position, insbesondere Endposition, gebracht wird. Von Vorteil ist dabei, dass bei Gefahr ein sicherer Zustand angesteuert wird. Insbesondere wird verhindert, dass das Hubteil vertikal auf das Mobilteil gefahren wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

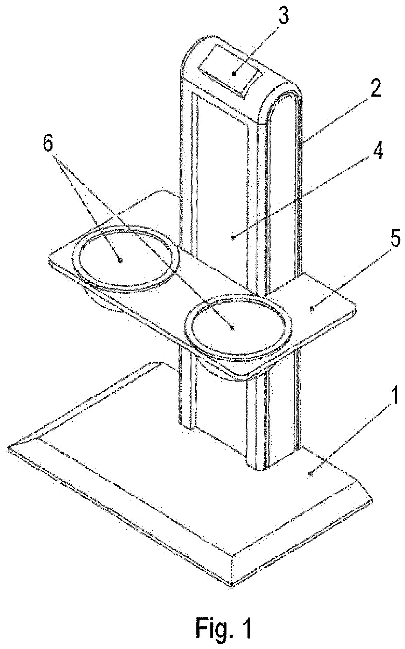

In der Figur 1 ist ein erfindungsgemäßes Hubwerk mit einer Faltwand 4 und einem Hubteil 5 in Schrägansicht dargestellt.

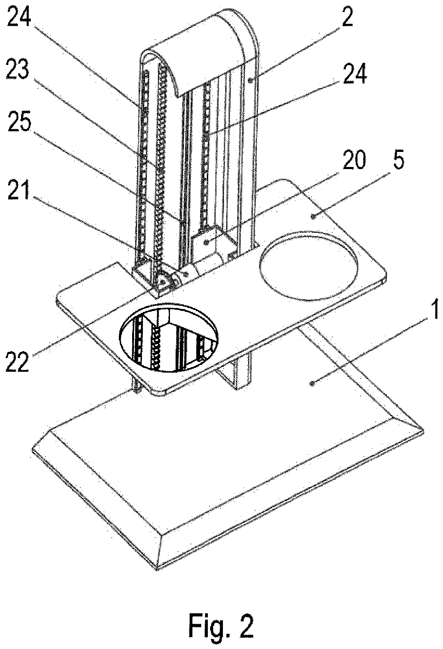

In der Figur 2 ist das Hubwerk angeschnitten dargestellt.

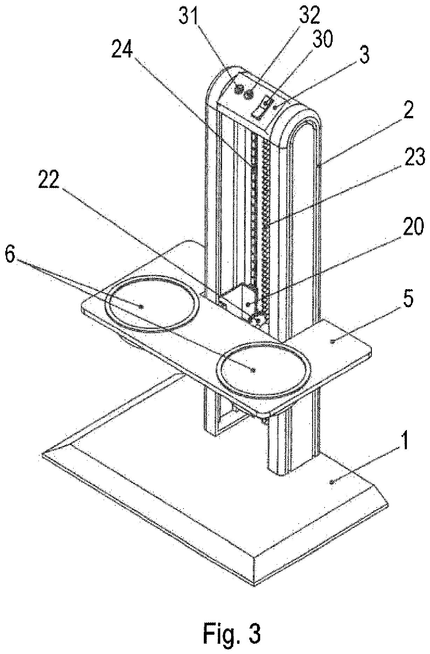

In der Figur 3 ist das Hubwerk ohne Faltwand 4 dargestellt.

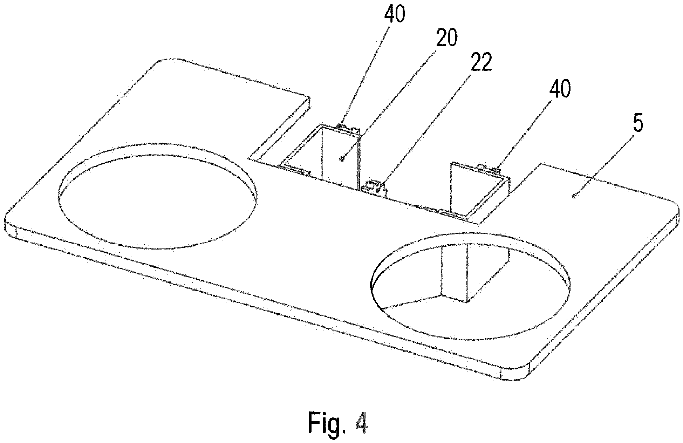

In der Figur 4 ist das Hubteil 5 in Schrägansicht dargestellt.

Wie in den Figuren dargestellt, weist das Hubwerk eine Grundplatte 1 auf, die vorzugsweise aus Stahl gefertigt ist.

An der Grundplatte 1 ist ein Tragteil 2 befestigt, welches an seiner Oberseite eine Bedieneinheit 3, insbesondere HMI-Schnittstelle, aufnimmt. Die Bedieneinheit 3 weist Eingabemittel und Anzeigemittel (31, 32) auf.

Als Eingabemittel ist ein Wahlschalter 30 vorgesehen, mit welchem die Fahrtrichtung des Hubteils 5 steuerbar ist, welches mit einem Hubkasten 20 verbunden ist, in welchem ein Elektromotor 21, insbesondere Gleichstrommotor, aufgenommen ist, der ein Zahnrad 22 direkt oder über ein zwischengeordnetes Getriebe antreibt.

Das Zahnrad 22 greift in eine Zahnstange 23 ein, die am Tragteil 2 befestigt ist.

Das Hubteil weist zwei Ausnehmungen auf, in welche jeweils ein Behälter 6, insbesondere Trog oder Schüssel, aufgenommen ist.

Eine erste Ausnehmung ist auf einer ersten Seite einer Ebene angeordnet, deren Normalenrichtung parallel zur Verbindungslinie zwischen den Schwerpunkten der beiden Ausnehmungen, insbesondere oder der beiden Behälter 6, ausgerichtet ist. Vorzugsweise schneidet die Ebene Stromschienen 25, die am Tragteil 2 befestigt sind und vertikal gerichtet sind, also längs des Tragteils 2 sich erstrecken, oder die Zahnstange 23 schneidet.

Die zweite Ausnehmung ist auf der anderen Seite der Ebene angeordnet.

Am Hubkasten 20 sind Schleifkontakte, insbesondere Bürsten, angeordnet, mittels derer elektrischer Strom von den Stromschienen 25 zur elektrischen Versorgung des Elektromotors
21 ableitbar ist. Vorzugsweise ist nur ein einziges Paar von Stromschienen 25 vorgesehen, die eine Gleichspannungsversorgung des Elektromotors 21 ausführbar machen.

Mittels einer am Tragteil 2 angeordneten Faltwand 4 ist der vom Tragteil 2 umgebene Innenraumbereich abgedeckt.

Bei der Linearbewegung des Hubkastens 20 entlang der Stromschienen 25 wird die Faltwand entsprechend verschoben und deckt den Innenraumbereich in jeder Position des Hubkastens 20 ab.

Die Zahnstange 23 ist parallel angeordnet zu den Stromschienen 25.

Außerdem sind zumindest zwei Linearführungen 24 parallel zur Zahnstange 23 und zu den Stromschienen 25 am Tragteil 2 angeordnet.

Die Linearführungen 24 sind vorzugsweise in vertikaler Richtung, insbesondere also in Richtung des Gravitationsfeldes der Erde, ausgerichtet.

Mittels des Wahlschalters 30 ist die Polung der Stromschienen 25 vorgebbar und somit die Drehrichtung des Elektromotors 21 in Vorwärtsrichtung oder Rückwärtsrichtung vorgebbar.

Bei Betrieb des Elektromotors 21 in Vorwärtsrichtung wird das erste Anzeigemittel 31, insbesondere Leuchte, angesteuert. Insbesondere leuchtet das erste Anzeigemittel 31, insbesondere nicht aber das zweite Anzeigemittel 32.

Bei Betrieb des Elektromotors 21 in Rückwärtsrichtung wird das zweite Anzeigemittel 32, insbesondere Leuchte, angesteuert. Insbesondere leuchtet das zweite Anzeigemittel 31, insbesondere nicht aber das erste Anzeigemittel 31.

Am Hubkasten 20 sind zwei, voneinander beabstandete Führungsteile 40 befestigt, welche formschlüssig mit den Linearführungen 24 verbunden sind und dabei nur einen Freiheitsgrad haben, der die Linearbewegung entlang der Linearführungen 24 ermöglicht.

Zwischen den beiden Linearführungen 24 sind die Stromschienen 25 und die Zahnstange 23 angeordnet.

Vorzugsweise sind die Linearführungen 24, die Stromschienen 25 und die Zahnstange 23 an einem ebenen Oberflächenbereich des Tragteils 2 angeordnet.

Mittels der großen Beabstandung der beiden Linearführungen 24 voneinander ist eine stabile Linearführung des Hubkastens 20 erreichbar.

Der vom Hubkasten 20 in Bewegungsrichtung, insbesondere also in vertikaler Richtung, überdeckte Bereich umfasst den von dem Zahnrad 22 und dem Elektromotor 21, insbesondere samt Getriebe, in Bewegungsrichtung überdeckten Bereich. Somit ist der Elektromotor 21 samt Zahnrad 22 vollständig im Hubkasten 20 aufnehmbar. Außerdem ist eine stabile Führung erreichbar, da die Führungsteile 40 in Bewegungsrichtung über eine große Länge hinweg

Des Weiteren ist ein Gehäuseteil des Elektromotors 21, insbesondere das Statorgehäuse des Elektromotors 21, mit dem Hubkasten 20 verbunden, insbesondere fest verbunden, und die Rotorwelle des Elektromotors drehfest mit dem Zahnrad 22 verbunden und an dem vom Elektromotor 21 abgewandten Endbereich der Rotorwelle im Hubkasten 20 drehbar gelagert, insbesondere mittels Gleitlager oder Wälzlager. Somit ist eine erhöhte Stabilität erreichbar.

Das Tragteil 2 ist vorzugsweise mehrstückig ausgeführt, wobei es zwei Seitenwandteile und eine mit diesen Seitenwandteilen verbundene Rückwand aufweist.

Die Grundplatte 1 ist vorzugsweise aus Eisenguss, Stahlguss oder aus einem Eisenhaltigen Material gefertigt. Die Rückwand des Tragteils 2 schließt bündig ab mit dem Rand der Grundplatte 1. Die senkrechte Projektion des Hubteils 5 auf eine Ebene, deren Normalenrichtung parallel zur Bewegungsrichtung ausgerichtet ist, ist in der senkrechten Projektion der Grundplatte 1 auf diese Ebene enthalten, insbesondere also von ihr umfasst. Somit ragt die Grundplatte zur Vorderseite hin weiter hervor als das Hubteil 5. Auf diese Weise ist ein Umkippen des Hubwerks zum Hubteil 5 hin verhindert.

Die Rückwand des Tragteils 2 wird beispielsweise an eine Gebäudewand angelehnt, angestellt oder mit dieser verbunden. Somit ist ein Umkippen des Hubwerks weder zur Rückwand hin noch zum Hubteil 5 hin verhindert.

Die beiden Seitenwandteile fungieren auch als Führung für die Faltwand 4. Die Faltwand 4 ist vorzugsweise aus einem Kunststoff, insbesondere aus einem elastischen Kunststoff, ausgeführt.

Das Hubteil 5 ist vorzugsweise aus Aluminium oder Holz ausgeführt. Der Hubkasten 20 ist vorzugsweise aus Metall, insbesondere aus Aluminium, ausgeführt.

Jedes der Führungsteile 40 ist zweistückig ausgeführt, wobei diese jeweiligen zwei Stücke der Führungsteile 40 voneinander in Bewegungsrichtung beabstandet und in Bewegungsrichtung zueinander fluchtend sind. Somit ist eine erhöhte mechanische Stabilität bei der Führung erreicht. Außerdem sind nur materialsparend kurze Stücke notwendig, die möglichst weit in Bewegungsrichtung voneinander entfernt am Hubkasten 20 angebracht sind, insbesondere zu einer Kante des Hubkastens 20, also zur Oberkante beziehungsweise Unterkante des Hubkastens 20 bündig angeordnet.

Die Stromschienen 25 sind vorzugsweise durch Halbierung eines Kupferrohrs herstellbar insbesondere wobei die Schnittebene die Drehsymmetrieachse des zylindrischen Rohrs enthält. Somit ist jede Stromschiene 25 als Zylinderhälfte ausgeführt.

Die am Hubkasten 20 angeordneten Bürsten stehen im Schleifkontakt mit den Stromschienen 25. Da die Stromschienen die halbzylindrische Vertiefung aufweisen, ist ein sicherer Kontakt der Bürsten mit den Stromschienen 25 gewährleistbar. Ein seitliches Herausrutschen der Bürsten oder auch nur eines der Bürstenhaare der Bürsten ist durch entsprechende Dimensionierung, insbesondere also möglichst tiefes Eintauchen, verhinderbar.

Am Tragteil 2 sind auch Endschalter angeordnet, so dass bei Kontakt des jeweiligen Endschalters mit dem Hubkasten 20 die Stromversorgung des Elektromotors beendet wird.

In der an der Oberseite des Tragteils 2 angeordneten Bedieneinheit 3 ist eine einen Mikroprozessor aufweisende elektronische Steuerung angeordnet. Dabei wird der Mikroprozessor aus einem Spannungsregler der Steuerung versorg, insbesondere aus einem 5 Volt Spannungsregler. Der Spannungsregler ist aus einem Schaltnetzteil versorgt, das eingangsseitig aus einem netzgespeisten Gleichrichter versorgt ist. Ausgangsseitig stellt das Schaltnetzteil einerseits eine erste Versorgungsspannung für den Spannungsregler zur Verfügung und andererseits eine zweite Versorgungsspannung für einen zweiten Spannungsregler, insbesondere einen 18 Volt Spannungsregler, welcher über die Stromschienen 25 und den mittels der Bürsten bewirkten Schleifkontakt den Elektromotor versorgt. Wichtig dabei ist, dass die vom zweiten Spannungsregler zur Verfügung gestellte Spannung größer ist also die vom ersten Spannungsregler zur Verfügung gestellte Spannung. Gleiches gilt für die von den beiden Spannungsreglern gelieferten Leistungen. Zwischen dem zweiten Spannungsregler und den beiden Stromschienen 25 sind jeweils steuerbare Schalter, insbesondere Relais, angeordnet. Die Ansteuersignale für die beiden steuerbaren Schalter werden von dem Mikroprozessor bereitgestellt. Somit ist jede der Stromschienen 25 separat abschaltbar.

Als Eingabemittel weist die Bedieneinheit einen Wahlschalter 30 auf und steuert von der Eingabe abhängig das erste Anzeigemittel 31, insbesondere Leuchte, und das zweite Anzeigemittel 32, insbesondere Leuchte, an.

Außerdem ist ein Lesegerät, insbesondere RFID-Lesegerät oder NFC-Lesegerät, in der elektronischen Steuerung angeordnet, wobei mittels des Lesegeräts innerhalb einer Reichweite ein Tag, insbesondere RFID-Tag oder NFC-Tag, auslesbar ist. Abhängig von der im Tag gespeicherten Information wird dann der Hubkasten bewegt, also auf eine obere oder auf eine untere Position. Bei Betätigung des Wahlschalters 30 wird die Information aus dem Tag niedriger priorisiert und somit die durch den Wahlschalter 30 vorgegebene Bewegungsrichtung ausgeführt.

Beispielsweise nähert sich dem Hubwerk ein den Tag aufweisendes Mobilteil, insbesondere ein Fahrzeug, ein Haustier oder eine Person. Sobald der Tag innerhalb der Reichweite sich befindet, wird der Hubkasten 20 auf die zu der im Tag gespeicherten Information zugehörige entsprechende Höhe gefahren. Beispielsweise wird beim Nähern eines Mobilteils, das die Behälter 6 auffüllen soll, auf die obere Position gefahren und beim Nähern eines anderen Mobilteils auf die untere Position.

Somit ist abhängig von der Art des sich dem Hubwerk nähernden Mobilteils der Hubkasten auf eine unterschiedliche Position gebracht.

Wenn jedoch das Mobilteil zu nahe herankommt an das Hubteil oder an den Hubkasten wird die Fahrbewegung gestoppt, damit keine Kollision in Bewegungsrichtung zwischen dem Mobilteil und dem Hubteil stattfindet. Somit ist also beispielsweise ein Herabfahren des Hubteils auf das Mobilteil verhindert.

Da die Zahnstange 23 an der Rückwand des Tragteils 2 befestigt ist und mit der Rückwand ebenso die Linearführungen 24 und die Stromschienen 25 ist eine hochpräzise Ausrichtung in Bewegungsrichtung erreichbar. Denn die Rückwand ist als ein einziges Stück gefertigt und somit ist bei der Montage der Zahnstange 23, der Linearführungen 24 und der Stromschienen 25 die relative Ausrichtung festgelegt. Vorzugsweise wird die Rückwand aus einem elektrisch isolierenden Material, insbesondere Kunststoff, gefertigt oder die Rückwand ist aus einem Metall, insbesondere Aluminium oder Stahl, gefertigt, wobei zwischen den Stromschienen 25 und der Rückwand ein Isolator zwischengeordnet ist und auch die Befestigungsschrauben, welche die Stromschienen 25 an die Rückwand andrücken, aus einem elektrisch isolierenden Material hergestellt sind.

Bei weiteren erfindungsgemäßen Ausführungsbeispielen wird zwischen das Zahnrad und den Elektromotor ein selbsthemmendes Getriebe, insbesondere Schneckengetriebe, zwischengeordnet. Auf diese Weise ist der Hubkasten 20 auf einer hohen Position auch bei ausgeschaltetem, also nicht mit Strom versorgtem Elektromotor, gesichert. Alternativ oder zusätzlich ist am Motor auch eine elektromagnetisch betätigbare Bremse angeordnet. Somit ist der Hubkasten 20 an einer Position sicher haltbar.

Bei weiteren erfindungsgemäßen Ausführungsbeispielen wird ein Stromsensor im Hubwerk angeordnet, der den durch die Stromschienen fließenden Strom erfasst. Somit ist aus dem erfassten Stromwert und der den Elektromotor versorgenden Spannung die Leistung des Elektromotors bestimmbar. In einem mit dem Mikroprozessor der Steuerung verbundenen Speicher ist die bei einer Leerfahrt benötigte Leistung hinterlegt, insbesondere einerseits für die Aufwärtsfahrt und andererseits für die Abwärtsfahrt. Somit ist durch Erfassen der Leistung die einerseits das Vorhandensein der Behälter 6 und die in den Behältern 6 aufgenommene Masse bestimmbar. Wenn diese Masse einen Schwellwert überschreitet, ist eine Warnung anzeigbar und/oder das Hubwerk in einen sicheren Zustand bringbar, insbesondere die Stromversorgung abschaltbar oder das Hubwerk auf eine untere Position bringbar.

Bei weiteren erfindungsgemäßen Ausführungsbeispielen wird statt der Schleifversorgung eine induktive Versorgung verwendet. Hierzu werden die Stromschienen 25 von der elektronischen Steuerung mit einem mittelfrequenten Wechselstrom beaufschlagt, insbesondere dessen Frequenz zwischen 10 kHz und 1 MHz liegt. Am Hubkasten 20 ist statt der Bürsten eine Sekundärwicklung angeordnet, die induktiv gekoppelt ist mit den Stromschienen. Vorzugswiese wird ein E-förmiger Ferritkern am Hubkasten befestigt, wobei die Sekundärwicklung auf den Ferritkern gewickelt ist. Ein Mittelschenkel des E-förmigen Ferritkerns taucht zwischen die beiden Stromschienen 25 ein. Die beiden anderen Schenkel des E-förmigen Ferritkerns ragen neben den Stromschienen 25 zum Tragteil 2 hervor. Der Sekundärwicklung ist eine Kapazität parallel oder in Reihe zugeschaltet, die derart dimensioniert ist, dass die Resonanzfrequenz des so gebildeten Schwingkreises der Frequenz des in die Stromschienen 25 eingeprägten Wechselstroms gleicht. Auf diese Weise ist ein hoher Wirkungsgrad auch bei geringer induktiver Kopplungsstärke erreichbar. Aus dem Schwingkreis ist ein Gleichrichter versorgt, aus dem der Elektromotor versorgt ist. Eine Umpolung des Elektromotors ist durch einen zwischen dem Gleichrichter und dem Elektromotor angeordneten vorzugsweise durch steuerbare elektronische Halbleiterschalter bewirkte Umpolungseinheit ausführbar. Das Ansteuersignal für die Umpolungseinheit wird von der Bedieneinheit über die induktive Kopplung an die auf dem Hubkasten angeordnete Umpolungseinheit übertragen, welche dem vorzugsweise als Gleichstrommotor ausgeführten Elektromotor eine entsprechend gepolte Versorgungsspannung zur Verfügung stellt, In Weiterbildung ist die Umpolungseinheit auch als Relais ausführbar, so dass auch ein elektrisches Abtrennen des Elektromotors bewirkbar ist.

### Bezugszeichenliste

1 Grundplatte
2 Tragteil
3 Bedieneinheit, insbesondere HMI-Schnittstelle
4 Faltwand
5 Hubteil
6 Behälter, insbesondere Trog oder Schüssel
20 Hubkasten
21 Elektromotor
22 Zahnrad
23 Zahnstange
24 Linearführung
25 Stromschienen
30 Wahlschalter
31 erstes Anzeigemittel, insbesondere Leuchte
32 zweites Anzeigemittel, insbesondere Leuchte
40 Führungsteil

## Patentansprüche

1. Hubwerk mit einem relativ zu einem Tragteil (2) des Hubwerks in einer Bewegungsrichtung bewegbar angeordneten Hubkasten (20),
wobei das Tragteil (2) auf einer Grundplatte (1) aufgestellt und mit dieser Grundplatte (1) verbunden ist,
wobei am Tragteil (2) zumindest eine Linearführung (24) und eine Zahnstange (23) befestigt sind,
wobei im Hubkasten (20) ein Elektromotor (21) angeordnet ist,
wobei ein Zahnrad (22) im Eingriff ist mit der Zahnstange (23) und drehfest verbunden ist mit einer Welle des Elektromotors (21),
wobei ein Hubteil (5) mit dem Hubkasten (20) verbunden ist,
**dadurch gekennzeichnet,**
**dass** am Tragteil (2) zumindest eine Stromschiene befestigt ist,
und **dass** die senkrechte Projektion des Hubteils (5) auf eine Ebene, deren Normalenrichtung parallel zur Bewegungsrichtung ausgerichtet ist, in der senkrechten Projektion der Grundplatte (1) auf diese Ebene enthalten ist, insbesondere also von ihr umfasst ist.

2. Hubwerk nach Anspruch 1,
**dadurch gekennzeichnet, dass**
das Hubteil (5) an einer Vorderseite des Hubkastens (20) befestigt ist und die Grundplatte (1) zur Vorderseite hin weiter hervorragt als das Hubteil (5), insbesondere zur Verhinderung des Umkippens des Hubwerks,
und/oder dass
die Grundplatte (1) aus Stahl gefertigt ist und die Wandstärke der Grundplatte (1) größer ist als die Wandstärke des Tragteils (2), insbesondere der Rückwand des Tragteils (2),
und/oder dass
der Elektromotor (21) ein Getriebe umfasst, insbesondere also der Elektromotor (21) ein Getriebemotor ist,
wobei die Welle die abtreibende Welle des Getriebes ist.

3. Hubwerk nach einem der vorangegangenen Ansprüche,
**dadurch gekennzeichnet, dass**
das Getriebe selbsthemmend ausgeführt ist, insbesondere so, dass das Getriebe einen Drehmomentfluss von der als Rotorwelle des Elektromotors (21) ausgeführten eintreibenden Welle des Getriebes zur abtreibenden Welle des Getriebes durchleitet und einen Drehmomentfluss von der abtreibenden Welle des Getriebes zur als Rotorwelle des Elektromotors (21) ausgeführten eintreibenden Welle des Getriebes hemmt.

4. Hubwerk nach einem der vorangegangenen Ansprüche,
**dadurch gekennzeichnet, dass**
das Tragteil (2), insbesondere eine Rückwand des Tragteils (2), als erster Schenkel eines L-förmig geformten Teils ausgebildet ist und auf den anderen Schenkel des L-förmig geformten Teils die Grundplatte (1) aufgelegt ist.

5. Hubwerk nach einem der vorangegangenen Ansprüche,
**dadurch gekennzeichnet, dass**
das Tragteil (2) mehrstückig ausgeführt ist, wobei es zwei Seitenwandteile und eine mit diesen Seitenwandteilen verbundene Rückwand aufweist.

6. Hubwerk nach einem der vorangegangenen Ansprüche,
**dadurch gekennzeichnet, dass**
ein Führungsteil (40) am Hubkasten (20) befestigt ist, das mit der Linearführung (24) in Wirkverbindung ist,
insbesondere wobei das Führungsteil (40) zweistückig ausgeführt ist, wobei die beiden Stücke des Führungsteils (40) in Bewegungsrichtung voneinander beabstandet sind.

7. Hubwerk nach einem der vorangegangenen Ansprüche,
**dadurch gekennzeichnet, dass**
am Hubkasten (20) zwei, insbesondere senkrecht und/oder quer zur Bewegungsrichtung voneinander beabstandete Führungsteile (40) befestigt sind, welche formschlüssig mit den Linearführungen verbunden sind und dabei nur einen einzigen translatorischen Freiheitsgrad aufweisen, der die Linearbewegung der Führungsteile (40) und/oder des Hubkastens (20) entlang der Linearführungen ermöglicht,
und/oder dass
am Hubkasten (20) oder am Elektromotor (21) Bürsten befestigt sind, welche die Stromschienen (25) berühren.

8. Hubwerk nach einem der vorangegangenen Ansprüche,
**dadurch gekennzeichnet, dass**
am Hubkasten (20) oder am Elektromotor (21) eine Sekundärwicklung angeordnet ist, welche induktiv gekoppelt ist mit zumindest einer der Stromschienen (25),
welche mit einem Wechselstrom beaufschlagt ist,
wobei der Sekundärwicklung eine Kapazität derart parallel oder in Reihe zugeschaltet ist, dass die Resonanzfrequenz des so gebildeten Schwingkreises der Frequenz des in die Stromschiene eingeprägten Wechselstroms gleicht,
wobei aus dem Schwingkreis ein am Hubkasten (20) oder am Elektromotor (21) angeordneter Gleichrichter gespeist ist, aus dem der Elektromotor (21) versorgt ist,
insbesondere wobei am gleichstromseitigen Anschluss des Gleichrichters ein Glättungskondensator angeordnet ist, insbesondere parallel zum Elektromotor (21).

9. Hubwerk nach einem der vorangegangenen Ansprüche,
**dadurch gekennzeichnet, dass**
die jeweilige Stromschiene als Rohrhälfte, insbesondere als Kupferrohrhälfte, ausgeführt ist.

10. Hubwerk nach einem der vorangegangenen Ansprüche,
**dadurch gekennzeichnet, dass**
- die Rückwand aus Metall ausgeführt ist und zwischen der Rückwand und der jeweiligen Stromschiene ein elektrischer Isolator angeordnet ist
oder dass
- die Rückwand aus einem elektrisch isolierenden Material, insbesondere Kunststoff, ausgeführt ist und die jeweilige Stromschiene an der Rückwand anliegt.

11. Hubwerk nach einem der vorangegangenen Ansprüche,
**dadurch gekennzeichnet, dass**
am Tragteil (2), insbesondere am oberen Ende des Tragteils (2), eine Bedieneinheit (3), insbesondere HMI-Schnittstelle, angeordnet ist,
wobei die Bedieneinheit (3) zumindest ein Eingabeelement, insbesondere Wahlschalter (30), ein Anzeigemittel (31, 32) und einen Mikroprozessor aufweist.

12. Hubwerk nach einem der vorangegangenen Ansprüche,
**dadurch gekennzeichnet, dass**
der Mikroprozessor mit einem Lesegerät, insbesondere NFC-Lesegerät oder RFID-Lesegerät, verbunden ist,
wobei der Mikroprozessor derart eingerichtet ist, dass abhängig von der aus einem Tag, insbesondere RFID-Tag oder NFC-Tag, ausgelesenen Information der Hubkasten (20) auf eine Linearposition gefahren wird, insbesondere auf eine obere oder auf eine untere Position,
insbesondere wobei die Fahrbewegung des Hubkastens (20) gestoppt wird, wenn der Tag im Nahbereich des Hubkastens (20) sich befindet, insbesondere also die senkrechte Projektion des Tags auf die Ebene in der senkrechten Projektion der Grundplatte (1) auf diese Ebene enthalten ist, insbesondere also von ihr umfasst ist,
insbesondere wobei der Tag an einem Mobilteil, insbesondere an einem Fahrzeug, an einem Haustier oder an einer Person, angeordnet ist.

13. Hubwerk nach einem der vorangegangenen Ansprüche,
**dadurch gekennzeichnet, dass**
ein Stromsensor im Hubwerk angeordnet ist, der den durch die Stromschienen (25) fließenden Strom erfasst,
wobei der Mikroprozessor derart eingerichtet ist und den in den Stromschienen (25) fließenden Strom derart steuert, dass der erfasste Wert des Stroms mit einem Schwellwert verglichen wird und bei Überschreiten des Schwellwerts das Hubwerk in einen sicheren Zustand gebracht wird, insbesondere die Stromversorgung abgeschaltete wird oder das Hubwerk auf eine untere Position gebracht wird,
und/oder dass
ein Stromsensor im Hubwerk angeordnet ist, der den durch die Stromschienen (25) fließenden Strom erfasst, und ein Sensor zur Erfassung der am Elektromotor (21) anliegenden Spannung im Hubwerk angeordnet ist,
wobei der Mikroprozessor derart eingerichtet ist und den in den Stromschienen (25) fließenden Strom derart steuert, dass aus dem erfassten Stromwert und aus dem erfassten Spannungswert die Leistung des Elektromotors (21) bestimmt wird,
wobei aus der so bestimmten Leistung das Vorhandensein der Behälter (6) und/oder die in den Behältern aufgenommene Masse detektiert und/oder bestimmt wird,
wobei das Hubwerk in einen sicheren Zustand gebracht wird, insbesondere die Stromversorgung abschaltbar oder das Hubwerk auf eine untere Position bringbar, wenn die detektierte und/oder bestimmte Masse einen Schwellwert überschreitet.

14. Verfahren zum Betreiben eines Hubwerks nach einem der vorangegangenen Ansprüche, **dadurch gekennzeichnet, dass**
abhängig von der aus einem Tag, insbesondere RFID-Tag oder NFC-Tag, ausgelesenen Information der Hubkasten (20) auf eine Linearposition gefahren wird, insbesondere auf eine obere oder oder auf eine untere Position,
insbesondere wobei die Fahrbewegung des Hubkastens (20) gestoppt wird, wenn der Tag im Nahbereich des Hubkastens (20) sich befindet, insbesondere also die senkrechte Projektion des Tags auf die Ebene in der senkrechten Projektion der Grundplatte (1) auf diese Ebene enthalten ist, insbesondere also von ihr umfasst ist,
insbesondere wobei der Tag an einem Mobilteil, insbesondere an einem Fahrzeug, an einem Haustier oder an einer Person, angeordnet ist.

15. **Verfahren nach Anspruch 14,**
**dadurch gekennzeichnet, dass**
der durch die Stromschienen (25) fließenden Strom erfasst wird und derart gesteuert wird, dass nach Vergleich des erfassten Werts des Stroms mit einem Schwellwert bei Überschreiten dieses Schwellwerts das Hubwerk in einen sicheren Zustand gebracht wird, insbesondere die Stromversorgung abgeschaltete wird oder das Hubwerk auf eine untere Position gebracht wird,
und/oder dass
der durch die Stromschienen (25) fließenden Strom erfasst wird und die am Elektromotor (21) anliegende Spannung erfasst wird und daraus ein Maß für die Leistung des Elektromotors (21) bestimmt wird und aus diesem Maß ein Wert einer in den Behältern aufgenommenen Masse bestimmt wird und/oder das Vorhandensein der Behälter (6) detektiert wird,
wobei das Hubwerk in einen sicheren Zustand gebracht wird, insbesondere die Stromversorgung abgeschaltet wird oder das Hubwerk auf eine untere Position, insbesondere Endposition, gebracht wird, wenn die detektierte und/oder bestimmte Masse einen Schwellwert überschreitet,
insbesondere und wobei ansonsten bei Nicht-Vorhandensein der Behälter (6) der Hubkasten (20) auf eine obere Position, insbesondere Endposition, gebracht wird.

## Claims

1. A lifting unit having a lifting box (20), movably arranged relative to a support part (2) of the lifting unit in a motion direction,
wherein the support part (2) is mounted on a base plate (1) and is connected to this base plate (1),
wherein at least one linear guide (24) and a rack (23) are secured to the support part (2), wherein an electric motor (21) is arranged in the lifting box (20),
wherein a toothed wheel (22) engages the rack (23) and is connected in a rotationally-fixed manner to a shaft of the electric motor (21),
wherein a lifting part (5) is connected to the lifting box (20),
**characterised in that**
at least one bus bar is secured to the support part (2),
and **in that** the perpendicular projection of the lifting part (5) onto a plane, whose normal direction is oriented parallel to the motion direction, is contained in the perpendicular projection of the base plate (1) onto this plane, in particular therefore is encompassed by it.

2. A lifting unit according to claim 1,
**characterised in that**
the lifting part (5) is secured to a front side of the lifting box (20) and the base plate (1) projects towards the front side further than the lifting part (5), in particular to prevent the tipping over of the lifting unit,
and/or **in that**
the base plate (1) is manufactured of steel and the wall thickness of the base plate (1) is greater than the wall thickness of the support part (2), in particular the rear wall of the support part (2),
and/or **in that**
the electric motor (21) comprises a gear unit, in particular therefore the electric motor (21) is a geared motor,
wherein the shaft is the output shaft of the gear unit.

3. A lifting unit according to any one of the preceding claims,
**characterised in that**
the gear unit is self-locking, in particular such that the gear unit passes a torque flow from the input shaft, in the form of a rotor shaft of the electric motor (21), of the gear unit to the output shaft of the gear unit and blocks a torque flow from the output shaft of the gear unit to the input shaft, in the form of a rotor shaft of the electric motor (21), of the gear unit.

4. A lifting unit according to any one of the preceding claims,
**characterised in that**
the support part (2), in particular a rear wall of the support part (2), is in the form of a first limb of an L-shaped part and the base plate (1) is placed onto the other limb of the L-shaped part.

5. A lifting unit according to any one of the preceding claims,
**characterised in that**
the support part (2) is multi-piece, wherein it has two lateral wall parts and a rear wall connected to these lateral wall parts.

6. A lifting unit according to any one of the preceding claims,
**characterised in that**
a guide part (40) is secured to the lifting box (20), which guide part is in an operative connection with the linear guide (24),
in particular wherein the guide part (40) is two-piece, wherein the two pieces of the guide part (40) are spaced apart from one another in a motion direction.

7. A lifting unit according to any one of the preceding claims,
**characterised in that**
two guide parts (40), in particular spaced apart from one another perpendicularly and/or transversely to the motion direction, are secured to the lifting box (20), which guide parts are connected to the linear guides in a form-locked manner and here have only a single translatory degree of freedom, which enables the linear motion of the guide parts (40) and/or of the lifting box (20) along the linear guides,
and/or **in that**
brushes are secured to the lifting box (20) or to the electric motor (21) and contact the bus bars (25).

8. A lifting unit according to any one of the preceding claims,
**characterised in that**
a secondary winding is arranged at the lifting box (20) or at the electric motor (21) and is inductively coupled to at least one of the bus bars (25), which is acted upon by an alternating current,
wherein a capacitor is connected in parallel or in series to the secondary winding such that the resonance frequency of the thus formed resonating circuit equals the frequency of the alternating current impressed upon the bus bar,
wherein a rectifier arranged at the lifting box (20) or at the electric motor (21) is fed from the resonating circuit, the electric motor (21) being supplied from the rectifier,
in particular wherein a smoothing capacitor is arranged at the DC-side connection of the rectifier, in particular parallel to the electric motor (21).

9. A lifting unit according to any one of the preceding claims,
**characterised in that**
the respective bus bar is in the form of a pipe half, in particular a copper pipe half.

10. A lifting unit according to any one of the preceding claims,
**characterised in that**
- the rear wall is made of metal and an electrical insulator is arranged between the rear wall and the respective bus bar
or **in that**
- the rear wall is made of an electrically insulating material, in particular plastics material, and the respective bus bar contacts the rear wall.

11. A lifting unit according to any one of the preceding claims,
**characterised in that**
an operating unit (3), in particular HMI interface, is arranged at the support part (2), in particular at the upper end of the support part (2),
wherein the operating unit (3) has at least one input element, in particular selector switch (30), a display means (31, 32) and a microprocessor.

12. A lifting unit according to any one of the preceding claims,
**characterised in that**
the microprocessor is connected to a reader, in particular NFC reader or RFID reader, wherein the microprocessor is configured such that the lifting box (20) is moved to a linear position, in particular to an upper or to a lower position, dependent on the information retrieved from a tag, in particular RFID tag or NFC tag,
in particular wherein the travel motion of the lifting box (20) is stopped when the tag is located in close range of the lifting box (20), in particular therefore the perpendicular projection of the tag onto the plane is contained in the perpendicular projection of the base plate (1) onto this plane, in particular therefore is encompassed by it,
in particular wherein the tag is arranged on a mobile part, in particular on a vehicle, on a domestic animal or on a person.

13. A lifting unit according to any one of the preceding claims,
**characterised in that**
a current sensor is arranged in the lifting unit and detects the current flowing through the bus bars (25),
wherein the microprocessor is configured and controls the current flowing in the bus bars (25) such that the detected value of the current is compared with a threshold value and the lifting unit is brought into a safe state when the threshold value is exceeded, in particular the current supply is switched off or the lifting unit is brought to a lower position,
and/or **in that**
a current sensor is arranged in the lifting unit and detects the current flowing through the bus bars (25), and a sensor for detecting the voltage applied to the electric motor (21) is arranged in the lifting unit,
wherein the microprocessor is configured and controls the current flowing in the bus bars (25) such that the power of the electric motor (21) is determined from the detected current value and from the detected voltage value,
wherein the presence of the containers (6) and/or the mass received in the containers is detected and/or determined from the power determined in this manner,
wherein the lifting unit is brought into a safe state, in particular the current supply can be switched off or the lifting unit can be brought to a lower position, when the detected and/or determined mass exceeds a threshold value.

14. A method of operating a lifting unit according to any one of the preceding claims,
**characterised in that**
the lifting box (20) is moved to a linear position, in particular to an upper or to a lower position, dependent on the information retrieved from a tag, in particular RFID tag or NFC tag,
in particular wherein the travel motion of the lifting box (20) is stopped when the tag is located in close range of the lifting box (20), in particular therefore the perpendicular projection of the tag onto the plane is contained in the perpendicular projection of the base plate (1) onto this plane, in particular therefore is encompassed by it,
in particular wherein the tag is arranged on a mobile part, in particular on a vehicle, on a domestic animal or on a person.

15. A method according to claim 14,
**characterised in that**
the current flowing through the bus bars (25) is detected and is controlled such that after comparison of the detected value of the current with a threshold value, the lifting unit is brought into a safe state when this threshold value is exceeded, in particular the current supply is switched off or the lifting unit is brought to a lower position,
and/or **in that**
the current flowing through the bus bars (25) is detected and the voltage applied to the electric motor (21) is detected and a measurement for the power of the electric motor (21) is determined therefrom and from this measurement there is determined a value of a mass received in the containers and/or there is detected the presence of the containers (6),
wherein the lifting unit is brought into a safe state, in particular the current supply is switched off or the lifting unit is brought to a lower position, in particular end position, when the detected and/or determined mass exceeds a threshold value,
in particular and wherein otherwise the lifting box (20) is brought to an upper position, in particular end position, when the containers (6) are not present.

## Revendications

1. Unité de levage avec un caisson de levage (20) agencé de manière mobile par rapport à une partie de support (2) de l'unité de levage dans une direction de déplacement,
la partie de support (2) étant placée sur une plaque de base (1) et reliée à cette plaque de base (1),
au moins un guide linéaire (24) et une crémaillère (23) étant fixés à la partie de support (2),
un moteur électrique (21) étant agencé dans le caisson de levage (20),
une roue dentée (22) venant en prise avec la crémaillère (23) et étant reliée de manière solidaire en rotation à un arbre du moteur électrique (21),
une partie de levage (5) étant reliée au caisson de levage (20),
**caractérisée en ce que**
au moins un rail conducteur est fixé à la partie de support (2),
et **en ce que** la projection verticale de la partie de levage (5) sur un plan dont la direction normale est orientée parallèlement à la direction de mouvement est contenue dans la projection verticale de la plaque de base (1) sur ce plan, en particulier y est donc incluse.

2. Unité de levage selon la revendication 1, **caractérisée en ce que**
la partie de levage (5) est fixée à une face avant du caisson de levage (20) et la plaque de base (1) fait saillie vers la face avant plus loin que la partie de levage (5), en particulier pour empêcher le basculement du mécanisme de levage,
et/ou **en ce que**
la plaque de base (1) est réalisée en acier, et l'épaisseur de paroi de la plaque de base (1) est supérieure à l'épaisseur de paroi de la partie de support (2), en particulier de la paroi arrière de la pièce de support (2),
et/ou **en ce que**
le moteur électrique (21) comprend une transmission, en particulier le moteur électrique (21) est un motoréducteur,
l'arbre étant l'arbre de sortie de la transmission.

3. Unité de levage selon l'une quelconque des revendications précédentes,
**caractérisée en ce que**
la transmission est conçue autobloquante, en particulier de manière à ce que la transmission fasse passer un flux de couple de rotation de l'arbre d'entraînement de la transmission conçu en tant qu'arbre de rotor du moteur électrique (21) à l'arbre de sortie de la transmission et bloque un flux de couple de rotation de l'arbre de sortie de la transmission à l'arbre d'entraînement de la transmission conçu en tant qu'arbre de rotor du moteur électrique (21).

4. Unité de levage selon l'une quelconque des revendications précédentes,
**caractérisée en ce que**
la partie de support (2), en particulier une paroi arrière de la partie de support (2), est conçue comme une première branche d'une pièce en forme de L et la plaque de base (1) est disposée sur l'autre branche de la pièce en forme de L.

5. Unité de levage selon l'une quelconque des revendications précédentes,
**caractérisée en ce que**
la partie de support (2) est conçue en plusieurs pièces, présentant deux parties de paroi latérale et une paroi arrière reliée à ces parties de paroi latérale.

6. Unité de levage selon l'une quelconque des revendications précédentes,
**caractérisée en ce que**
une partie de guidage (40) est fixée au caisson de levage (20), qui est en liaison active avec le guide linéaire (24),
en particulier dans lequel la partie de guidage (40) est conçue en deux parties, les deux parties de la partie de guidage (40) étant espacées l'une de l'autre dans la direction de déplacement.

7. Unité de levage selon l'une quelconque des revendications précédentes,
**caractérisée en ce que**
sur le caisson de levage (20) sont fixées deux parties de guidage (40) espacées l'une de l'autre, en particulier perpendiculairement et/ou transversalement à la direction de déplacement, qui sont reliées par complémentarité de forme aux guides linéaires et ne présentent qu'un seul degré de liberté de translation qui permet le déplacement linéaire des parties de guidage (40) et/ou du caisson de levage (20) le long des guides linéaires,
et/ou **en ce que**
sur le caisson de levage (20) ou sur le moteur électrique (21) sont fixées des brosses qui sont en contact avec les rails conducteurs (25).

8. Unité de levage selon l'une quelconque des revendications précédentes, **caractérisée en ce que**
un enroulement secondaire est agencé sur le caisson de levage (20) ou sur le moteur électrique (21), qui est couplé par induction à au moins l'un des rails conducteurs (25), qui est alimentée en courant alternatif,
l'enroulement secondaire étant connecté à une capacité en parallèle ou en série de telle sorte que la fréquence de résonance du circuit oscillant ainsi formé est égale à la fréquence du courant alternatif injecté dans le rail conducteur,
un redresseur agencé sur le caisson de levage (20) ou sur le moteur électrique (21) est alimenté en sortie du circuit oscillant, en sortie duquel le moteur électrique (21) est alimenté,
en particulier un condensateur de lissage étant disposé au niveau du raccordement coté courant continu du redresseur, en particulier parallèlement au moteur électrique (21).

9. Unité de levage selon l'une quelconque des revendications précédentes,
**caractérisée en ce que**
le rail conducteur respectif est réalisé sous la forme d'une moitié de tuyau, en particulier sous la forme d'une moitié de tuyau en cuivre.

10. Unité de levage selon l'une quelconque des revendications précédentes, **caractérisée en ce que**
- la paroi arrière est en métal et un isolant électrique est agencé entre la paroi arrière et le rail conducteur respectif
ou **en ce que**
- la paroi arrière est conçue en un matériau électriquement isolant, en particulier en plastique, et le rail conducteur respectif repose contre la paroi arrière.

11. Unité de levage selon l'une quelconque des revendications précédentes,
**caractérisée en ce que**
une unité de commande (3), en particulier une interface **IHM,** est agencée sur la partie de support (2), en particulier à l'extrémité supérieure de la partie de support (2),
l'unité de commande (3) présentant au moins un élément d'entrée, en particulier un sélecteur (30), un moyen d'affichage (31, 32) et un microprocesseur.

12. Unité de levage selon l'une quelconque des revendications précédentes, **caractérisée en ce que**
le microprocesseur est relié à un lecteur, en particulier un lecteur NFC ou un lecteur RFID,
le microprocesseur étant configuré de telle sorte qu'en fonction de l'information lue à partir d'une étiquette, en particulier une étiquette RFID ou une étiquette NFC, le caisson de levage (20) est déplacé dans une position linéaire, en particulier dans une position supérieure ou dans une position inférieure,
le déplacement du caisson de levage (20) étant en particulier arrêté lorsque l'étiquette se trouve à proximité du caisson de levage (20), en particulier également la projection verticale de l'étiquette sur le plan étant contenue dans la projection verticale de la plaque de base (1) sur ce plan, en particulier y est donc incluse,
l'étiquette étant en particulier agencée sur une partie mobile, en particulier sur un véhicule, sur un animal domestique ou sur une personne.

13. Unité de levage selon l'une quelconque des revendications précédentes, **caractérisée en ce que**
un capteur de courant est agencé dans l'unité de levage, qui détecte du courant circulant à travers les rails conducteurs (25),
le microprocesseur étant configuré et commandant le courant circulant dans les rails conducteurs (25) de manière à ce que la valeur détectée du courant soit comparée à une valeur de seuil, et en cas de dépassement de la valeur de seuil, l'unité de levage est mise dans un état sûr, en particulier l'alimentation électrique est coupée ou l'unité de levage est amenée en position basse,
et/ou **en ce que**
un capteur de courant est agencé dans l'unité de levage, qui détecte le courant circulant à travers les rails conducteurs (25), et un capteur pour détecter la tension appliquée au moteur électrique (21) est agencé dans l'unité de levage,
le microprocesseur étant configuré et commandant le courant circulant dans les rails conducteurs (25) de manière à déterminer la puissance du moteur électrique (21) à partir de la valeur de courant détectée et de la valeur de tension détectée,
la présence des contenants (6) et/ou la masse reçue dans les contenants étant détectées et/ou déterminées à partir de la puissance ainsi déterminée,
l'unité de levage étant amenée dans un état sûr, en particulier l'alimentation électrique pouvant être coupée ou l'unité de levage pouvant être amenée dans une position inférieure si la masse détectée et/ou déterminée dépasse une valeur de seuil.

14. Procédé pour faire fonctionner une unité de levage selon l'une quelconque des revendications précédentes, **caractérisé en ce que**
en fonction de l'information lue à partir d'une étiquette, en particulier une étiquette RFID ou une étiquette NFC, le caisson de levage (20) est déplacé dans une position linéaire, en particulier dans une position supérieure ou dans une position inférieure,
le déplacement du caisson de levage (20) étant en particulier arrêté lorsque l'étiquette se trouve à proximité du caisson de levage (20), en particulier également la projection verticale de l'étiquette sur le plan étant contenue dans la projection verticale de la plaque de base (1) sur ce plan, en particulier y est donc incluse,
l'étiquette étant en particulier agencée sur une partie mobile, en particulier sur un véhicule, sur un animal domestique ou sur une personne.

15. Procédé selon la revendication 14, **caractérisé en ce que**
le courant circulant à travers les rails conducteurs (25) est détecté et commandé de manière à ce qu'après comparaison de la valeur détectée du courant avec une valeur de seuil, en cas de dépassement de cette valeur de seuil, l'unité de levage soit mise dans un état sûr, en particulier l'alimentation électrique soit coupée ou l'unité de levage soit amenée en position basse,
et/ou **en ce que**
le courant circulant à travers les rails conducteurs (25) est détecté et la tension appliquée au moteur électrique (21) est détectée, et une mesure de la puissance du moteur électrique (21) est déterminée à partir de celles-ci et une valeur d'une masse absorbée dans les contenants est déterminée à partir de cette mesure et/ou la présence des contenant (6) est détectée,
l'unité de levage étant amenée dans un état sûr, en particulier l'alimentation électrique étant coupée, ou l'unité de levage étant amenée à une position inférieure, en particulier une position d'extrémité, lorsque la masse détectée et/ou déterminée dépasse une valeur de seuil, en particulier et dans le cas contraire, en l'absence du contenant (6), le caisson de levage (20) étant amené à une position supérieure, en particulier une position d'extrémité.
